# EUROPÄISCHE PATENTSCHRIFT

(11) **EP 3 914 483 B1**
(45) Veröffentlichungstag und Bekanntmachung des Hinweises auf die Patenterteilung: **18.01.2023**
(21) Anmeldenummer: 20705287.9
(22) Anmeldetag: 24.01.2020
(51) Int. Cl.: B60R 21/233, B60R 21/239

(54) **FAHRZEUGINSASSEN-RÜCKHALTESYSTEM**
VEHICLE OCCUPANT RESTRAINT SYSTEM
SYSTÈME DE RETENUE DES PASSAGERS D'UN VÉHICULE

(30) Priorität: 24.01.2019 DE 202019100396 U
(43) Veröffentlichungstag der Anmeldung: 01.12.2021
(73) Patentinhaber: Dalphi Metal España, S.A., 36213 Vigo (ES)
(72) Erfinder: DEL RÍO GARCÍA, Alejandro, 36309 Oia (DE)
(74) Vertreter: ZF Patentabteilung - DIPS
(86) Internationale Anmeldenummer: PCT/EP2020/051706
(87) Internationale Veröffentlichungsnummer: WO 2020/152307

(56) Entgegenhaltungen:
- EP-A1- 2 666 678
- US-A1- 2005 151 359
- US-A1- 2009 160 169

## Beschreibung

Die Erfindung betrifft ein Fahrzeuginsassen-Rückhaltesystem, umfassend einen Gassack, der eine Außenwand mit einer Frontwand, einer Rückwand und einer Befüllöffnung hat, wobei die Außenwand einen Aufprallabschnitt für den Insassen hat, gemäß Oberbegriff von Anspruch 1.

Gassäcke werden zunehmend komplexer, weil sie eine gute Rückhaltewirkung bei immer unterschiedlicheren Aufprallsituationen entfalten müssen. Aufprallsituationen wie reine Frontalkollisionen oder Seitenkollisionen, bestimmte Arten von Schrägaufprallsituationen sowie Situationen mit Insassen Out-Of-Position sorgen für komplexe Rahmenbedingungen, die sich teilweise widersprechen. Aus diesem Grund wird intensiv daran geforscht, verschiedenste Aufprallsituationen mit einem Fahrzeuginsassen-Rückhaltesystem möglichst gut zu beherrschen. Ein gattungsgemäßer Gassack ist beispielsweise in der US 2009/160169 A1 beschrieben.

Beispielsweise soll ein Gassack, der einen sehr nahe am nicht entfalteten Gassack sitzenden Insassen zurückhalten soll, nicht zu aggressiv sein, dennoch aber eine gute Rückhaltewirkung entfalten. Dasselbe muss bei einem großen, schweren Insassen, der weit vom Gassack entfernt sitzt, ebenso realisiert werden. Es gibt in diesem Zusammenhang Ideen, die Außenwand des Gassacks mit einem oder mehreren Auslassöffnungen zu versehen, die abhängig von den Rahmenbedingungen aktiv oder passiv geöffnet werden können, um ein Ausblasen des Gases zu ermöglichen und um das Gassackvolumen zu reduzieren, wenn ein Insasse zu nahe am Gassack sitzen sollte. Es gibt Überlegungen, im Inneren des Gassacks einen kleineren Sack mit Ausströmöffnungen vorzusehen, in den Gas zuerst einströmt und über dessen Öffnungen dann das Gas in den übrigen Gassack überströmt. Darüber hinaus gibt es Fahrzeuginsassen-Rückhaltesysteme mit einem pyrotechnisch betätigbaren Aktuator, der Auslassöffnungen öffnet oder verschließt oder Fangbänder freigibt, beispielsweise wenn ein ausreichend weit vom Gassack entfernt sitzender Insasse detektiert wird.

Aufgabe der Erfindung ist es, ein Fahrzeuginsassen-Rückhaltesystem so zu verbessern, dass der zugehörige Gassack für Out-Of-Position-Situationen gute Rückhaltewerte sucht und der darüber hinaus möglichst einfach aufgebaut ist.

Dies wird gelöst durch ein Fahrzeuginsassen-Rückhaltesystem, umfassend einen Gassack, der eine Außenwand mit einer Frontwand und einer Rückwand und einer Befüllöffnung hat, wobei die Außenwand einen Aufprallabschnitt für den Insassen hat, welcher üblicherweise Teil der Frontwand ist, einen durch ein flexibles Material gebildeten, im Gassackinneren positionierten, internen Strömungskanal, der ein an die Befüllöffnung anschließendes Einlassende und ein entgegengesetztes Auslassende hat, welches, bezogen auf den vollständig entfalteten Zustand des Gassacks, auf den Aufprallabschnitt gerichtet ist und von ihm beabstandet frei endet, wobei vom Strömungskanal zumindest ein Auslasskanal abzweigt, insbesondere zwei Auslasskanäle, über den Gas aus dem Strömungskanal zu einer Auslassöffnung an der Außenwand strömen kann, wobei ein Verschlussmittel für den Strömungskanal vorgesehen ist, welches bei Unterschreiten eines Mindestabstands eines Insassen von der Rückwand Gasaustritt über das Auslassende zumindest reduziert.

Das Verschlussmittel umfasst wenigstens ein Zugmittel, welches den Strömungskanal stromabwärts der Abzweigstelle des Auslasskanals in einem Übergangszustand vor Entfaltung und bis Erreichen einer vorgegebenen Teilentfaltung zumindest teilweise verschließen kann.

Im Inneren des Gassacks ist ein insbesondere schlauchförmiges Gebilde vorgesehen, das das Gas, welches über den Gaserzeuger eingeleitet wird, vollständig aufnimmt und zur Frontwand lenkt, damit diese während der Entfaltung von der Rückwand wegbewegt wird. Ferner kann über einen vom Strömungskanal abzweigenden Auslasskanal optional Gas ins Freie abströmen. Diese Leitungsführung im Inneren sorgt für in engen Grenzen vorherbestimmbare Entfaltungsvorgänge. Einerseits wird der Entfaltungsvorgang durch den Strömungskanal und dessen Auslassende sehr gut vorherbestimmbar, denn über das Auslassende bläst das Gas gerichtet gegen die Frontwand und sorgt für eine sehr exakt definierte Entfaltung des Gassacks. Das Verschlussmittel ist in der Lage, durch teilweises Schließen des Auslassendes des Strömungskanals für ein Ausströmen oder erhöhtes Ausströmen über den zumindest einen Auslasskanal zu sorgen. Damit wird der Gassackinnendruck bei einem zu nahe am Gassack sitzenden Insassen reduziert.

Der Begriff "zumindest reduziert" im Zusammenhang mit dem Gasaustritt bedeutet, dass der Querschnitt des jeweiligen Kanals reduziert wird gegenüber einem vollständig offenen Querschnitt und der Kanal auch eventuell komplett geschlossen sein kann, wobei ein komplettes Schließen nur optional vorgesehen sein kann.

Das Auslassende kann, bezogen auf den vollständig entfalteten Zustand des Gassacks, wenigstens 50 % der Gassacktiefe vom Aufprallabschnitt entfernt sein. Die Gassacktiefe wird durch den größten Abstand der Frontwand von der Rückwand gemessen. Damit können die Frontwand und ihr Aufprallabschnitt in einem relativ großen Bereich liegen, ohne dass die Frontwand Kontakt mit dem Auslassende bekommen kann, falls der Insasse so weit vorne sitzen würde, dass er in den Bereich eindringt, den der vollständig aufgeblasene Gassack einnehmen würde.

Das Verschlussmittel wird beispielsweise durch den Aufprallabschnitt selbst gebildet, der vom Insassen von einer vollständigen Entfaltungsbewegung begrenzt wird und dabei mit dem Auslassende zur Anlage kommt und das Auslassende zum Teil schließen kann. In diesem Fall sitzt der Insasse so weit vorne oder ist so weit nach vorne gelehnt, dass er tief in dem Raum positioniert ist, den der vollständig aufgeblasene Gassack einnehmen würde. Der Aufprallabschnitt kontaktiert somit den Insassen sehr früh und kann aufgrund der Barriere, die der Insasse darstellt, nicht weiter bewegt werden. Damit drückt der flexible Strömungskanal mit seinem Auslassende gegen den Aufprallabschnitt, sodass das Auslassende zumindest teilweise geschlossen werden kann oder zumindest der Gasaustritt reduziert wird.

Ferner kann das Verschlussmittel einen insbesondere pyrotechnisch betätigbaren Aktuator aufweisen, welcher das Zugmittel aktiviert oder deaktiviert, um den Strömungskanal freizugeben oder zumindest teilweise zu schließen, wobei natürlich das vollständige Schließen darunterfällt. Ein solches Zugmittel ist ein einfaches, kostengünstiges Teil, welches sich bezüglich seiner Funktion sehr vorherbestimmbar verhält und mit welchem Entwickler von Fahrzeuginsassen-Rückhaltemitteln Erfahrung haben.

Das Zugmittel kann den Strömungskanal vor Entfalten bereits zumindest teilweise, insbesondere Großteils (zu mindestens 50 % bezogen auf die Querschnittsfläche) schließen. Der Aktuator wird bei Erreichen oder Überschreiten des Mindestabstandes aktiviert, um das Zugmittel und damit daraufhin den Strömungskanal freizugeben. Beispielsweise umschlingt das Zugmittel den Strömungskanal nahe des Auslassendes. Wenn der Insasse den Mindestabstand auf jeden Fall einhält oder sogar noch weiter von der Rückwand entfernt ist als der Mindestabstand, sollte der Strömungskanal bei dieser Ausführungsform ungehindert Gas durchlassen. Damit strömt über die Auslassöffnung weiter Gas gegen die Frontwand, um zu einer weiteren Entfaltung des Gassacks zu führen.

Es kann eine Sensorik vorhanden sein, welche die Position des Insassen detektiert, sowie eine mit dem Aktuator und der Sensorik gekoppelte Steuerung, wobei diese den Aktuator in Abhängigkeit von der detektierten Position auslöst. Eine solche Sensorik kann eine optische Sensorik sein, die im Fahrzeuginnenraum angebracht ist.

Der zumindest eine Auslasskanal kann von einer Abzweigstelle zum Strömungskanal bis zu seiner zugeordneten Auslassöffnung führen und insbesondere permanent gasdurchströmbar sein.

Alternativ hierzu kann der zumindest eine Auslasskanal im Bereich von seiner Abzweigstelle bis zu seiner zugeordneten Auslassöffnung führen. Eine Absperreinrichtung sorgt dafür, dass der Auslasskanal bei Unterschreiten des Mindestabstands offen ist und ansonsten zumindest verengt wird. Ist also der Insasse sehr nahe am nicht aufgeblasenen Gassack positioniert und wird er durch den sich noch entfaltenden Gassack getroffen, kann über den offenen Auslasskanal Gas seitlich ins Freie entweichen.

Die Absperreinrichtung ist optional mit der Außenwand so gekoppelt, dass sie in Abhängigkeit vom Entfaltungszustand der Außenwand den Auslasskanal zumindest verengt oder freigibt. Sitzt der Insasse zu nahe, ist der Auslasskanal offen, sitzt der Insasse ausreichend entfernt von der Rückwand, wirkt die Absperreinrichtung, um den Auslasskanal zumindest teilweise zu verschließen.

Die Absperreinrichtung kann ein Zugmittel aufweisen, welches sich von dem Auslasskanal in Richtung zur Frontwand erstreckt, wo das Zugmittel an der Frontwand oder der Seitenwand befestigt ist. Im vollständig entfalteten Zustand des Gassacks wird das Zugmittel auf Zug belastet und verengt den Auslasskanal zumindest. Auch hier ist die Absperreinrichtung sehr einfach und zuverlässig ausgebildet.

Beispielsweise kann das Zugmittel den Auslasskanal einschnüren, indem es gemäß einer Variante U-förmig um den Auslasskanal geschlungen ist. In vollständig aufgeblasenem Zustand führt das Zugmittel dazu, dass der flexible Auslasskanal geknickt ist, d. h. ein Wandabschnitt wird durch das Zugmittel gegen den gegenüberliegenden Wandabschnitt gedrückt, sodass der Auslasskanal eingeschnürt wird. Dieses Einschnüren kann auch früher als im vollständig aufgeblasenen Zustand erreicht werden. Über die Länge des Zugmittels lässt sich sehr einfach und kostengünstig einstellen, ab wann der Auslasskanal freiliegen oder vollständig freiliegen soll.

Die Erfindung sieht vor, dass insbesondere zwei Auslasskanäle vom Strömungskanal ausgehen, insbesondere im selben Bereich des Strömungskanals ausgehen und bis zu beabstandeten, zugeordneten Auslassöffnungen verlaufen. Diese Auslassöffnungen können beispielsweise einander gegenüberliegen.

Die Auslassöffnungen sind insbesondere seitlich angeordnet.

Die Auslasskanäle und der Strömungskanal können zusammen eine T-Form oder Kreuzform bilden, bezogen auf den aufgeblasenen Zustand, was sich als besonders vorteilhaft bezüglich der Funktionalität herausgestellt hat.

Der Strömungskanal und der zumindest eine Auslasskanal, insbesondere die beiden Auslasskanäle, haben eine schlauchförmige Kontur mit einer flexiblen Wand.

Wie zu Beginn bereits erläutert, erstrecken sich der oder die Auslasskanäle von der Abzweigstelle zum Strömungskanal bis zur Außenwand, sodass hier kein Spalt zwischen der Außenwand und dem Ende des jeweiligen Auslasskanals vorhanden ist. Die Wand des Auslasskanals ist insbesondere an die Außenwand angenäht.

Die zumindest eine oder die mehreren Auslassöffnungen liegen vorzugsweise im vollständig aufgeblasenen Zustand des Gassacks in dem Drittel des Gassacks, bezogen auf den Abstand von der Rückwand zur Frontwand, welches an die Rückwand angrenzt. Damit wird ein Anströmen des Insassen bei einer Gasentweichung über den oder die Auslasskanäle verhindert und gleichzeitig sichergestellt, dass über den oder die Auslasskanäle bei zu nahe sitzendem Insassen immer Gas entweichen kann.

Zusätzlich ist es von Vorteil, wenn der oder die Auslasskanäle von ihrer Abzweigstellte schräg seitlich und zugleich in Richtung Rückwand verlaufen, wieder bezogen auf den vollständig aufgeblasenen Zustand. Das bedeutet, das Gas strömt über das Einlassende ein und ist bestrebt, über das Auslassende geradlinig weiterzuströmen. Dadurch, dass der oder die Auslasskanäle aber eine Erstreckungskomponente in Gegenrichtung haben, wird das einströmende Gas überwiegend oder komplett in Richtung zum Auslassende strömen und nicht in den oder die Auslasskanäle eintreten. Zumindest wird nur eine geringe Menge an Gas durch die Auslasskanäle strömen, solange der Gasaustritt über das Auslassende ausreichend ermöglicht ist. Erst dann, wenn aufgrund des Verschlussmittels die Strömung über die Auslassöffnung reduziert wird und ein starker Gegendruck im Strömungskanal aufgebaut wird, wird Gas in den oder die Auslasskanäle in großer Menge einströmen oder (fast) das ganze Gas in den oder die Auslasskanäle einströmen, um dann den Gassack seitlich zu verlassen.

Wenn zuvor immer von einem weit vorne sitzenden Insassen die Rede ist, so ist zu betonen, dass das Fahrzeuginsassen-Rückhaltesystem nach der Erfindung auch entsprechend funktioniert, wenn ein Gegenstand entsprechend weit vorne positioniert ist oder weit nach hinten positioniert ist, beispielsweise wenn auf einem Sitz ein Gegenstand transportiert wird. Auch hier ist es für die Sicherheit vorteilhaft, wenn bei einem sehr weit nach vorne ragenden Gegenstand der Gassack nicht vollständig aufgeblasen wird, sondern wenn Gas seitlich austreten kann.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine schematische Draufsicht auf ein Fahrzeuginsassen-Rückhaltesystem in vollständig aufgeblasenem Zustand,
- Figur 2 das Fahrzeuginsassen-Rückhaltesystem nach Anspruch 1 bei zu nahe sitzendem Insassen in teilweise aufgeblasenem Zustand,
- Figur 3 eine schematische Draufsicht auf ein erfindungsgemäßes Fahrzeuginsassen-Rückhaltesystem in vollständig aufgeblasenem Zustand gemäß einer zweiten Ausführungsform,
- Figur 4 das Fahrzeuginsassen-Rückhaltesystem nach Figur 3 bei zu nahe sitzendem Insassen,
- Figur 5 eine schematische Draufsicht eines erfindungsgemäßen Fahrzeuginsassen-Rückhaltesystems in vollständig aufgeblasenem Zustand gemäß einer dritten Ausführungsform,
- Figur 6 das Fahrzeuginsassen-Rückhaltesystem nach Figur 5 bei zu nahe sitzendem Insassen,
- Figur 7 eine schematische Draufsicht auf ein Fahrzeuginsassen-Rückhaltesystem in vollständig aufgeblasenem Zustand gemäß einer vierten Ausführungsform, und
- Figur 8 das Fahrzeuginsassen-Rückhaltesystem nach Figur 7 bei zu nahe sitzendem Insassen.

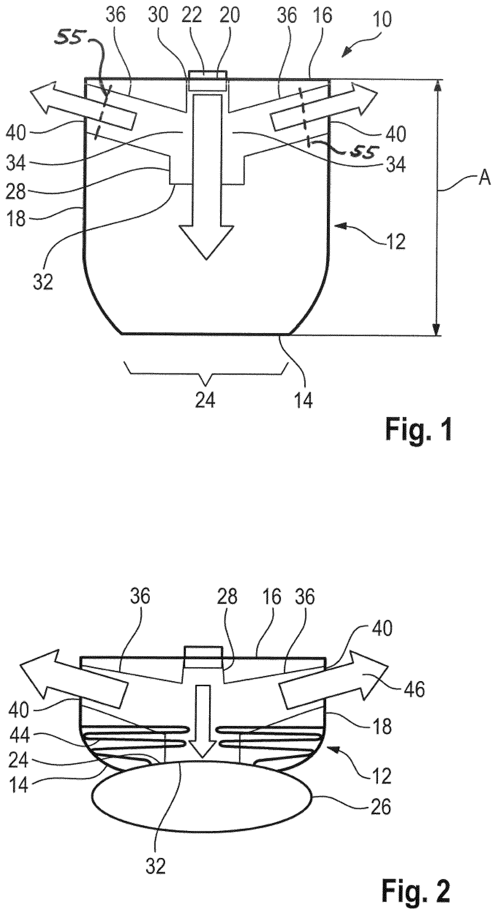

In Figur 1 ist ein Fahrzeuginsassen-Rückhaltesystem 10 dargestellt, mit einem Gassack 12, der eine Außenwand hat, mit einer Frontwand 14, einer entgegengesetzten Rückwand 16 sowie einer Seitenwand 18.

An der Rückwand 16 hat der Gassack 12 eine Befüllöffnung 20, an der oder in der ein Gasgenerator 22 angebracht ist. Der Gasgenerator 22 kann außerhalb des Gassacks 12 liegen oder komplett innerhalb des Gassacks 12 oder teilweise in das Innere des Gassacks 12 ragen. Der Gasgenerator 22 ist optional Teil des Fahrzeuginsassen-Rückhaltesystems 10.

Der gezeigte Gassack 12 ist ein Front-Gassack, wobei zu betonen ist, dass das nachfolgend beschriebene Konzept auch auf andere Gassackarten, z. B. auch auf Seitengassäcke anwendbar ist.

Die Frontwand 14 hat, je nach Gassackform, einen mehr oder weniger großen Aufprallabschnitt 24, der von einem Insassen 26 (siehe Figur 2) im Rückhaltefall kontaktiert werden kann. Im vorliegenden Ausführungsbeispiel ist der Aufprallabschnitt 24 die gesamte Frontwand 14.

Wenn im Folgenden von einem Insassen 26 gesprochen wird, so ist dies gleichbedeutend mit einem Gegenstand, der am entsprechenden Sitz positioniert ist und der entsprechend weit vorne oder hinten positioniert ist, wie dies im Zusammenhang mit dem Insassen 26 erläutert wird.

Im Inneren des Gassacks 12 ist eine Gasführungseinheit untergebracht, im vorliegenden Fall eine Gasführungseinheit mit mehreren Kanälen, die durch flexible Wände gebildet sind, die insbesondere schlauchförmig ausgeführt sind. Diese Wände sind nicht durch Abschnitte der Außenwand gebildet.

Einer der Kanäle ist ein Strömungskanal 28, der sich von einem Einlassende 30, welches sich unmittelbar an die Befüllöffnung 20 anschließt, bis zu einem entgegengesetzten Auslassende 32 erstreckt. Das Auslassende 32 ist in diesem Fall offen und in voll aufgeblasenem Zustand des Gassacks gemäß Figur 1 so ausgerichtet, dass es auf den Aufprallabschnitt 24 gerichtet ist.

Vom Strömungskanal 28 zweigen an einer entsprechenden Abzweigstelle 34 Auslasskanäle 36 ab, die ebenfalls schlauchförmig mit einer flexiblen Außenwand ausgeführt sind. Die freien Enden des Auslasskanals sind an der Seitenwand 18 angenäht, die in diesem Bereich jeweils eine Auslassöffnung 40 aufweist.

Im vollständig aufgeblasenen Zustand hat der Gassack 12 eine Tiefe A, gemessen von der Rückwand 16 bis zur Frontwand 14.

Das Auslassende 32 liegt, bezogen auf den vollständig aufgeblasenen Zustand, wenigstens 50 % der Gassacktiefe A entfernt vom Aufprallabschnitt 24.

Die Auslassöffnungen 40 liegen, ebenfalls bezogen auf den vollständig aufgeblasenen Zustand, in dem Drittel des Abstands A, welches an die Rückwand 16 angrenzt.

Diese vorgenannten Maßangaben beziehen sich auf sämtliche Ausführungsformen, sind aber als Optionen zu verstehen.

Der Gassack 12 nach sämtlichen gezeigten Ausführungsformen ist so ausgeführt, dass ein Verschlussmittel für den Strömungskanal 28 vorhanden ist, welches bei Unterschreiten eines Mindestabstands eines Insassen 26 (oder eines Gegenstands) von der Rückwand 16 Gasaustritt über das Auslassende 32 zumindest reduziert. Das "Reduzieren" bezieht sich auf den Gasaustritt im vollständig aufgeblasenen Zustand, in welchem der Strömungskanal 28 und sein Auslassende 32 nicht eingeschränkt sind.

Bei der Ausführungsform nach den Figuren 1 und 2 ist das Verschlussmittel durch den Aufprallabschnitt 24 gebildet.

Hier wird der Mindestabstand durch den Abstand des Auslassendes 32 von der Rückwand 16 definiert. Sobald dieser Mindestabstand unterschritten wird, weil der Insasse 26 (siehe Figur 2) sehr nahe an der Rückwand 16 positioniert ist, verhindert der Insasse 26 eine Komplettentfaltung des Gassacks 12. Damit versucht sich der Auslasskanal weiter zu entfalten und drückt gegen den Aufprallabschnitt 24. Eine gewisse Menge an Gas kann dann noch zwischen dem Auslassende 32 und der Innenseite des Aufprallabschnitts 24 in das Innere des Gassacks 12 entweichen, wobei aber ein Teil der Seitenwand 18 gefaltet bleibt. Die Falten sind in Figur 2 mit dem Bezugszeichen 44 versehen und symbolisch dargestellt. Durch den erhöhten Innendruck in dem Strömungskanal 28 strömt eine erhöhte Menge an Gas, symbolisiert durch dicke Pfeile 46, über die Auslasskanäle 36 und die Auslassöffnungen 40 ins Freie.

Auch bei der Situation in Figur 1 kann über die Auslassöffnungen 40 Gas ins Freie abströmen, durch die wesentlich schmäleren Pfeile ist aber symbolisiert, dass die hier entweichende Gasmenge wesentlich geringer ist als in der Aufprallsituation nach Figur 2. Der Innendruck des Gassacks 12 ist damit bei der Aufprallsituation nach Figur 2 geringer als bei der nach Figur 1. Die Belastung des Insassen 26 ist somit reduziert im Vergleich zu einem Gassack 12, der ohne Auslassöffnungen 40 ausgestattet ist.

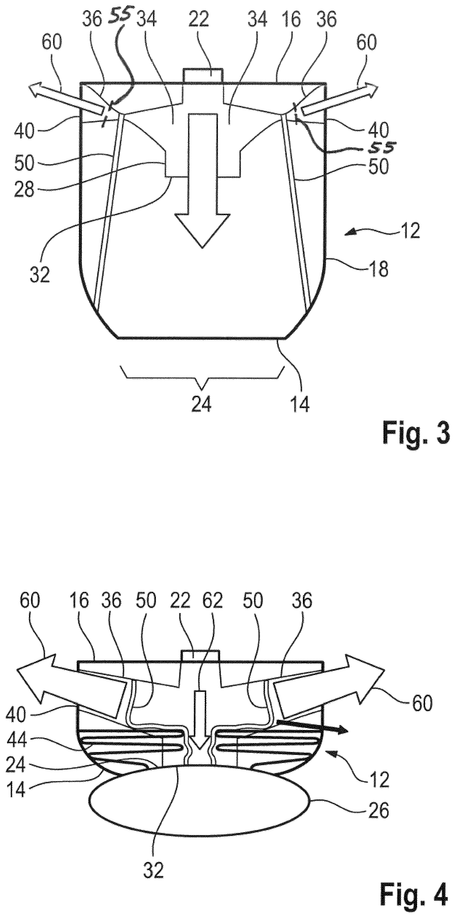

Bei der Ausführungsform nach Figur 3 ist das Verschlussmittel ebenfalls der Aufprallabschnitt 24.

Als Unterschied zur ersten Ausführungsform sind jedoch Absperreinrichtungen in Form von Zugmitteln 50 vorgesehen, die abhängig von der Position des Insassen 26 (oder des transportierten Gegenstands) die Auslasskanäle 36 verengt oder freigibt.

Bei der ersten Ausführungsform sind die Auslasskanäle 36 stets offen, sie verlaufen lediglich von ihrer Abzweigstelle 34 seitlich nach außen sowie auch noch nach hinten in Richtung zur Rückwand 16.

Dieser Verlauf der Auslasskanäle 36 ist zwar auch bei der zweiten Ausführungsform vorhanden, die Zugmittel 50 sind jedoch um die Auslasskanäle 36 geschlungen und vorderhalb der Auslasskanäle 36 z. B. im Bereich des Übergangs zu der Seitenwand 18 zur Frontwand 14, d.h. im Bereich des vorderen Drittels der Seitenwand 18, oder unmittelbar an der Frontwand 14 befestigt.

Wenn sich der Gassack 12 nahezu komplett oder komplett entfalten kann, schnürt deshalb jedes Zugmittel 50 seinen zugeordneten Auslasskanal 36 ein, wie in Figur 3 gezeigt, sodass der Strömungsquerschnitt deutlich verringert ist oder der Kanal sogar geschlossen ist.

Bei der Ausführungsform gemäß Figur 3 kann noch eine geringe Gasmenge (symbolisiert durch die kleinen Pfeile 60) aus den Auslassöffnungen 40 ausströmen. Die überwiegende Menge des Gases strömt dann über das Auslassende 32 des Strömungskanals 28 nach vorne aus und drückt die Frontwand 14 in Richtung zum Insassen.

Ist jedoch gemäß Figur 4 der Insasse 26 sehr nahe an der Rückwand 16 positioniert, so kann sich der Gassack 12 nicht komplett entfalten. Wie bei Figur 2 drückt die Frontwand 14 gegen das Auslassende 32 und reduziert die ausströmende Gasmenge, symbolisiert durch den schmalen Pfeil 62.

Der überwiegende Teil des Gases strömt dann über die Auslasskanäle 36 ins Freie, hier wiederum symbolisiert durch die dann in Figur 4 dicken Pfeile 60.

Die Auslasskanäle 36 werden bei Figur 4 durch die zugeordneten Absperreinrichtungen in Form der Zugmittel 50 nicht im Strömungsquerschnitt verringert, weil die Zugmittel 50 nicht auf Zug belastet sind, denn der Gassack 12 ist nicht ausreichend entfaltet, um diesen Zug aufzubringen.

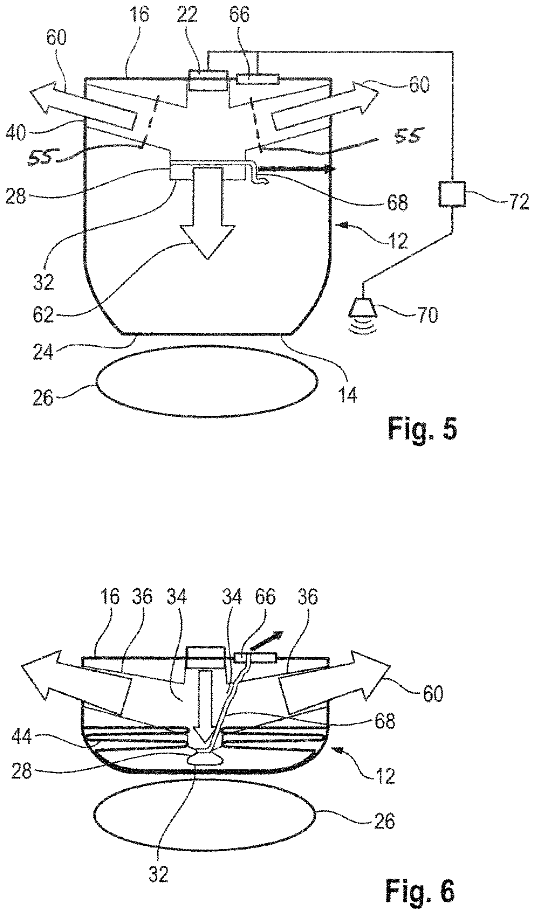

Während bei der ersten und der zweiten Ausführungsform gemäß den Figuren 1 und 2 bzw. 3 und 4 das Verschlussmittel als passive Einrichtung ausgeführt ist, ist es nach den Ausführungsformen nach Figuren 5 bis 8 aktiv angesteuert.

Bei der erfindungsgemäßen Ausführungsform gemäß den Figuren 5 und 6 ist ein elektrisch betriebener, z. B. pyrotechnischer Aktuator 66 vorhanden, an dem ein Verschlussmittel in Form eines Zugmittels 68 befestigt ist. In Figur 6 ist zu sehen, dass das Zugmittel 68 mit einem Ende am Aktuator 66 angebracht ist.

Über eine Sensorik 70 wird die Position eines Insassen 26 ermittelt. Die Sensorik 70 steht mit einer Steuerung 72 in Verbindung, die wiederum mit dem Aktuator 66 und gegebenenfalls auch zusätzlich mit dem Gasgenerator 22 gekoppelt ist, um deren Aktivierung anzusteuern.

Ist der Insasse 26 oder der entsprechende Gegenstand weit genug von der Rückwand 16 entfernt, aktiviert die Steuerung 72 in einem Rückhaltefall den Gasgenerator 22 und auch den Aktuator 66, sodass letzterer das entsprechende Ende des Zugmittels 68 vor oder während des Aufblasens des Gassacks 12 freigibt.

Im Ausgangszustand schnürt das Zugmittel 68 nämlich, wie in Figur 6 gezeigt, den Strömungskanal 28 im Bereich zwischen den Abzweigstellen 34 und dem Auslassende 32 ein, sodass wenig Gas zum Aufblasen zur Verfügung steht.

Das Volumen des Gassacks 12 kann damit klein gehalten werden, wenn der Insasse 26 gemäß der Situation in Figur 6 sehr nahe an der Rückwand 16 positioniert ist und einen vorbestimmten Mindestabstand unterschreitet.

In diesem Fall strömt der überwiegende Teil des Gases oder zumindest ein großer Teil des Gases über die Auslasskanäle 36 ins Freie, wie dies anhand der dicken Pfeile 60 in Figur 6 dargestellt ist.

Wird gemäß der Situation nach Figur 5 ein Insasse 26 detektiert, der weit genug von der Rückwand 16 beabstandet ist, wird, wie gesagt, der Aktuator 66 die Absperreinrichtung in Form des Zugmittels 68 freigeben, sodass der Strömungskanal 28 nicht oder nur minimal im Querschnitt eingeschränkt ist und der Großteil des Gases im Gassackinneren bleibt (siehe Pfeil 62) und nur relativ wenig Gas ins Freie abströmt.

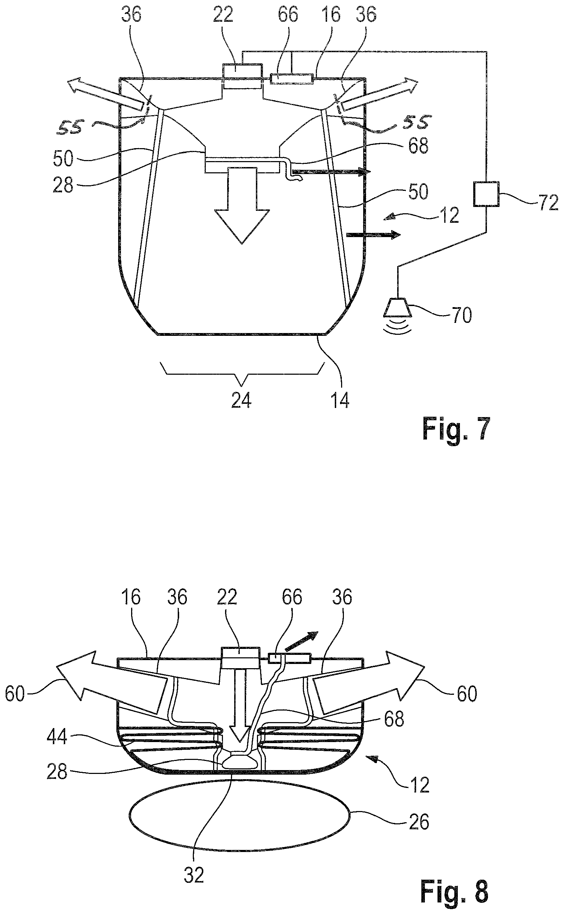

Die Ausführungsform nach den Figuren 7 und 8 ist eine Kombination der Ausführungsformen nach den Figuren 5 und 6 und der nach den Figuren 3 und 4.

Die Auslasskanäle 36 sind optional mit einer Absperreinrichtung in Form der Zugmittel 50 in ihrem Querschnitt reduzierbar, und das aktiv betätigbare Verschlussmittel in Form des Zugmittels 68 ist durch den Aktuator 66 betätigbar, um wahlweise den Strömungskanal 28 komplett freizugeben oder zumindest teilweise im Querschnitt zu verringern.

In einer weiteren Ausführungsform, die mit jeder zuvor beschriebenen Ausführungsform kombinierbar ist, ist vorgesehen, dass zumindest einer der, vorzugsweise alle, Auslasskanäle 36 mit einer druckreaktiven Verschlußeinrichtung 55 verschlossen sind. Diese druckreaktive Verschlußeinrichtung 55 ist vorzugsweise als Reißnaht ausgeführt.

Dies ist vorteilhaft, da zu Beginn des Aufblasvorgangs keine oder nur eine geringe Gasmenge aus den Auslassöffnungen 40 ausströmen kann.

In einem Anwendungsfall strömt die überwiegende Menge des Gases anfänglich das Auslassende 32 des Strömungskanals 28 nach vorne aus und drückt die Frontwand 14 in Richtung zum Insassen. Sobald die Frontwand entsprechenden Widerstand erfährt, steigt der Druck im Gassack und die druckreaktive Verschlußeinrichtung 55 öffnet sich. Nun kann das Gas aus den Auslassöffnungen 40 ausströmen. Durch die jeweilige, ggf. auch für jeden Auslasskanal 36 unterschiedlich ausgeführte, Ausgestaltung der Reißnaht 55 kann das Öffnungsverhalten eingestellt werden.

Zu betonen ist, dass die vorgenannten Ausführungsbeispiele Merkmale beinhalten, die nicht alle zwingend miteinander gekoppelt sind, denn auch Einzelmerkmale schaffen Vorteile. Auch können diese Einzelmerkmale mit anderen Ausführungsformen kombiniert sein. Die Aufzählung von Merkmalen in einem Satz oder Absatz ist nicht als zwingende Koppelung dieser Merkmale zu verstehen.

## Patentansprüche

1. Fahrzeuginsassen-Rückhaltesystem, umfassend einen Gassack (12), der eine Außenwand mit einer Frontwand (14), einer Rückwand (16) und einer Befüllöffnung (20) hat, wobei die Außenwand einen Aufprallabschnitt (24) für den Insassen (26) hat, einen durch ein flexibles Material gebildeten, im Gassackinneren positionierten, internen Strömungskanal (28), der ein an die Befüllöffnung (20) anschließendes Einlassende (30) und ein entgegengesetztes Auslassende (32) hat, welches, bezogen auf den vollständig entfalteten Zustand des Gassacks (12), auf den Aufprallabschnitt (24) gerichtet ist und von ihm beabstandet frei endet, wobei vom Strömungskanal (28) zumindest ein Auslasskanal (36) abzweigt, über den Gas aus dem Strömungskanal (28) zu einer zugeordneten Auslassöffnung (40) an der Außenwand strömen kann, wobei ein Verschlussmittel für den Strömungskanal (28) vorgesehen ist, welches bei Unterschreiten eines Mindestabstandes eines Insassen (26) von der Rückwand (16) Gasaustritt über das Auslassende (32) zumindest reduziert, **dadurch gekennzeichnet, dass** das Verschlussmittel wenigstens ein Zugmittel (68) umfasst, welches den Strömungskanal (28) stromabwärts einer Abzweigstelle (34) des Auslasskanals (36) in einem Ausgangszustand vor Entfaltung und bis Erreichen einer vorgegebenen Teilentfaltung zumindest teilweise verschließen kann.

2. Fahrzeuginsassen-Rückhaltesystem nach Anspruch 1, **dadurch gekennzeichnet, dass** das Auslassende (32), bezogen auf den vollständig entfalteten Zustand des Gassacks, um wenigstens 50 % der Gassacktiefe (A) vom Aufprallabschnitt (24) entfernt ist.

3. Fahrzeuginsassen-Rückhaltesystem nach Anspruch 1 oder 2, **dadurch gekennzeichnet, dass** das Verschlussmittel durch den Aufprallabschnitt (24) gebildet ist, der, vom den Mindestabstand unterschreitenden Insassen (26) von einer vollständigen Entfaltungsbewegung begrenzt, am Auslassende (32) zur Anlage kommen und dieses teilweise schließen kann.

4. Fahrzeuginsassen-Rückhaltesystem nach Anspruch 1 oder 2, **dadurch gekennzeichnet, dass** das Verschlussmittel einen insbesondere pyrotechnischen Aktuator (66) aufweist, der das Zugmittel aktiviert oder deaktiviert, um den Strömungskanal (28) freizugeben oder zumindest teilweise zu schließen.

5. Fahrzeuginsassen-Rückhaltesystem nach Anspruch 4, **dadurch gekennzeichnet, dass** das Zugmittel (68) den Strömungskanal (28) vor Entfalten des Gassacks bereits zumindest teilweise verschließt und dass der Aktuator (66) unter der Voraussetzung, dass der Mindestabstand erreicht oder überschritten wird, aktiviert wird, um das Zugmittel (68) freizugeben und den Strömungskanal (28) zu öffnen.

6. Fahrzeuginsassen-Rückhaltesystem nach Anspruch 5, **dadurch gekennzeichnet, dass** eine Sensorik (70) vorhanden ist, welche die Position des Insassen (26) detektiert, sowie eine mit dem Aktuator (66) und der Sensorik (70) gekoppelten Steuerung (72), die den Aktuator (66) in Abhängigkeit von der Position des Insassen (26) auslöst.

7. Fahrzeuginsassen-Rückhaltesystem nach einem der vorhergehenden Ansprüche, **dadurch gekennzeichnet, dass** der zumindest eine Auslasskanal (36) von einer Abzweigstelle (34) zum Strömungskanal (28) bis zu seiner Auslassöffnung (40) führt und während des Entfaltungsvorgangs permanent gasdurchströmbar ist.

8. Fahrzeuginsassen-Rückhaltesystem nach einem der Ansprüche 1 bis 6, **dadurch gekennzeichnet, dass** der zumindest eine Auslasskanal (36) im Bereich von einer Abzweigstelle (34) zum Strömungskanal (28) bis zu seiner zugeordneten Auslassöffnung (40) führt und eine Absperreinrichtung vorhanden ist, um den Auslasskanal (36) bei Unterschreiten des Mindestabstands zu öffnen und ansonsten zumindest zu verengen.

9. Fahrzeuginsassen-Rückhaltesystem nach Anspruch 8, **dadurch gekennzeichnet, dass** die Absperreinrichtung mit der Außenwand so gekoppelt ist, dass sie in Abhängigkeit vom Entfaltungszustand der Außenwand den Auslasskanal (36) unterschiedlich verengt ist.

10. Fahrzeuginsassen-Rückhaltesystem nach Anspruch 9, **dadurch gekennzeichnet, dass** die Absperreinrichtung ein Zugmittel (50) aufweist, das sich von dem Auslasskanal (36) in Richtung zur Frontwand (14) erstreckt und an der Außenwand befestigt ist, um im vollständig entfalteten Zustand des Gassacks (12) auf Zug belastet zu sein und den Auslasskanal (36) zu verengen.

11. Fahrzeuginsassen-Rückhaltesystem nach Anspruch 10, **dadurch gekennzeichnet, dass** das Zugmittel (50) den zugeordneten Auslasskanal (36) einschnüren kann und in einen nicht vollständig aufgeblasenen Zustand den Auslasskanal (36) freigibt und in vollständig aufgeblasenem Zustand verengt.

12. Fahrzeuginsassen-Rückhaltesystem nach einem der vorhergehenden Ansprüche, **dadurch gekennzeichnet, dass** zwei Auslasskanäle (36) vom Strömungskanal (28) ausgehen und bis zu voneinander beabstandeten, insbesondere gegenüberliegenden seitlichen Auslassöffnungen (40) verlaufen, insbesondere wobei die Auslasskanäle (36) und der Strömungskanal (28) zusammen eine T-Form oder eine Kreuzform bilden.

13. Fahrzeuginsassen-Rückhaltesystem nach einem der vorhergehenden Ansprüche, **dadurch gekennzeichnet, dass** der Strömungskanal (28) und der zumindest eine Auslasskanal (36) jeweils eine schlauchförmige Kontur haben.

14. Fahrzeuginsassen-Rückhaltesystem nach einem der vorhergehenden Ansprüche, **dadurch gekennzeichnet, dass** die zumindest eine Auslassöffnung (40) bezogen auf den vollständig aufgeblasenen Zustand in dem Drittel bezogen auf den Abstand der Rückwand (16) zur Frontwand (14) liegt, welches an die Rückwand (16) angrenzt.

15. Fahrzeuginsassen-Rückhaltesystem nach einem der vorhergehenden Ansprüche, **dadurch gekennzeichnet, dass**, bezogen auf den vollständig aufgeblasenen Zustand des Gassacks (12), der zumindest eine Auslasskanal (36) von einer Abzweigstelle (34) zum Strömungskanal (28) schräg seitlich und zugleich in Richtung Rückwand (16) verläuft.

## Claims

1. A vehicle occupant restraint system comprising an airbag (12) which has an outer wall including a front wall (14), a rear wall (16) and a filling opening (20), the outer wall having an impact portion (24) for the occupant (26), comprising an internal flow passage (28) formed by flexible material and positioned inside the airbag which flow passage includes an inlet end (30) adjacent to the filling opening (20) and an opposite outlet end (32) which is directed, relating to the completely deployed state of the airbag (12), to the impact portion (24) and ends freely at a distance from the latter, wherein at least one outlet passage (36) via which gas can flow out of the flow passage (28) to an associated outlet opening (40) at the outer wall branches off the flow passage (28), wherein a shutoff means for the flow passage (28) is provided which at least reduces gas outlet through the outlet end (32) if an occupant (26) falls below a minimum distance from the rear wall (16), **characterized in that** the shutoff means comprises at least one tensile means (68) which can at least partially close the flow passage (28) downstream of a branching point (34) of the outlet passage (36) in an initial state prior to deployment and until reaching a predetermined partial deployment.

2. The vehicle occupant restraint system according to claim 1, **characterized in that** the outlet end (32) is distanced from the impact portion (24) by at least 50% of the airbag depth (A), relating to the completely deployed state of the airbag.

3. The vehicle occupant restraint system according to claim 1 or 2, **characterized in that** the shutoff means is formed by the impact portion (24) which, being restricted by the occupant (26) falling below the minimum distance by a complete deployment movement, may contact the outlet end (32) and partially close the latter.

4. The vehicle occupant restraint system according to claim 1 or 2, **characterized in that** the shutoff means includes an especially pyrotechnical actuator (66) for activating or deactivating the tensile means so as to release or at least partially close the flow passage (28).

5. The vehicle occupant restraint system according to claim 4, **characterized in that** the tensile means (68) already at least partially closes the flow passage (28) before deployment of the airbag, and **in that** the actuator (66) is activated provided that the minimum distance is reached or exceeded so as to release the tensile means (68) and to open the flow passage (28).

6. The vehicle occupant restraint system according to claim 5, **characterized in that** a sensor system (70) which detects the position of the occupant (26) as well as a controller (72) coupled to the actuator (66) and the sensor system (70) which releases the actuator (66) depending on the position of the occupant (26) are provided.

7. The vehicle occupant restraint system according to any one of the preceding claims, **characterized in that** the at least one outlet passage (36) leads from a branching point (34) to the flow passage (28) up to its outlet opening (40) and gas may permanently flow through the same during the deployment operation.

8. The vehicle occupant restraint system according to any one of the claims 1 to 6, **characterized in that** the at least one outlet passage (36) leads in the area of a branching point (34) to the flow passage (28) up to its associated outlet opening (40) and a shutoff means is provided to open the outlet passage (36) if the minimum distance is undergone and otherwise at least to narrow the same.

9. The vehicle occupant restraint system according to claim 8, **characterized in that** the shutoff means is coupled to the outer wall so that it narrows the outlet passage (36) differently in response to the deploying state of the outer wall.

10. The vehicle occupant restraint system according to claim 9, **characterized in that** the shutoff means includes a tensile means (50) which extends from the outlet passage (36) toward the front wall (14) and is fastened to the outer wall so as to be tensioned in the completely deployed state of the airbag (12) and to narrow the outlet passage (36).

11. The vehicle occupant restraint system according to claim 10, **characterized in that** the tensile means (50) may constrict the associated outlet passage (36) and in a not completely inflated state releases the outlet passage (36) and narrows the same in the completely inflated state.

12. The vehicle occupant restraint system according to any one of the preceding claims, **characterized in that** two outlet passages (36) start from the flow passage (28) and extend to lateral outlet openings (40) spaced apart from each other and being especially opposed, especially wherein the outlet passages (36) and the flow passage (28) together are T-shaped or cross-shaped.

13. The vehicle occupant restraint system according to any one of the preceding claims, **characterized in that** each of the flow passage (28) and the at least one outlet passage (36) has a tubular contour.

14. The vehicle occupant restraint system according to any one of the preceding claims, **characterized in that** the at least one outlet opening (40), relating to the completely inflated state, is located in the third which is adjacent to the rear wall (16), relating to the distance of the rear wall (16) from the front wall (14).

15. The vehicle occupant restraint system according to any one of the preceding claims, **characterized in that**, relating to the completely inflated state of the airbag (12), the at least one outlet passage (36) extends from a branching point (34) to the flow passage (28) diagonally laterally and, at the same time, in the direction of the rear wall (16).

## Revendications

1. Système de retenue des occupants d'un véhicule, comprenant un coussin gonflable (12) qui a une paroi extérieure avec une paroi avant (14), une paroi arrière (16) et une ouverture de remplissage (20), pour lequel la paroi extérieure possède une section d'impact (24) pour l'occupant (26), un canal d'écoulement interne (28) formé par un matériau flexible, positionné à l'intérieur du coussin gonflable, qui possède une extrémité d'entrée (30) se raccordant à l'ouverture de remplissage (20) et une extrémité de sortie opposée (32) laquelle, par rapport à l'état complètement déployé du coussin gonflable (12), est dirigée vers la section d'impact (24) et se termine librement à distance de celle-ci, pour lequel au moins un canal de sortie (36) bifurque du canal d'écoulement (28), par lequel le gaz peut s'écouler du canal d'écoulement (28) vers une ouverture de sortie (40) associée sur la paroi extérieure, pour lequel un moyen d'obturation est prévu pour le canal d'écoulement (28), lequel réduit au moins la sortie de gaz par l'extrémité de sortie (32) lorsqu'un occupant (26) n'est pas à une distance minimale de la paroi arrière (16),
**caractérisé en ce que** le moyen d'obturation comprend au moins un moyen de traction (68) lequel peut obturer au moins partiellement le canal d'écoulement (28) en aval d'un point de dérivation (34) du canal de sortie (36) dans un état initial avant le déploiement et jusqu'à ce qu'un déploiement partiel prédéfini soit atteint.

2. Système de retenue des occupants d'un véhicule selon la revendication 1, **caractérisé en ce que** l'extrémité de sortie (32), par rapport à l'état complètement déployé du coussin gonflable, est éloignée de la section d'impact (24) d'au moins 50 % de la profondeur (A) du coussin gonflable.

3. Système de retenue des occupants d'un véhicule selon la revendication 1 ou 2, **caractérisé en ce que** le moyen de fermeture est formé par la section d'impact (24) qui, est limitée par l'occupant (26) passant en dessous de la distance minimale d'un mouvement de déploiement complet, peut venir en appui sur l'extrémité de sortie (32) et la fermer partiellement.

4. Système de retenue des occupants d'un véhicule selon la revendication 1 ou 2, **caractérisé en ce que** le moyen de fermeture comporte un actionneur (66), notamment pyrotechnique, qui active ou désactive le moyen de traction pour libérer ou fermer au moins partiellement le canal d'écoulement (28).

5. Système de retenue des occupants d'un véhicule selon la revendication 4, **caractérisé en ce que** le moyen de traction (68) ferme déjà au moins partiellement le canal d'écoulement (28) avant le déploiement du coussin gonflable et **en ce que** l'actionneur (66) est activé à condition que la distance minimale soit atteinte ou dépassée, afin de libérer le moyen de traction (68) et d'ouvrir le canal d'écoulement (28).

6. Système de retenue des occupants d'un véhicule selon la revendication 5, **caractérisé en ce qu'**il existe un système de capteurs (70) qui détecte la position de l'occupant (26), ainsi qu'une commande (72) couplée à l'actionneur (66) et au système de capteurs (70), qui déclenche l'actionneur (66) en fonction de la position de l'occupant (26).

7. Système de retenue des occupants d'un véhicule selon l'une des revendications précédentes, **caractérisé en ce que** le au moins un canal de sortie (36) s'étend d'un point de dérivation (34) vers le canal d'écoulement (28) jusqu'à son ouverture de sortie (40) et peut être traversé en permanence par un gaz pendant le processus de déploiement.

8. Système de retenue des occupants d'un véhicule selon l'une des revendications 1 à 6, **caractérisé en ce que** l'au moins un canal de sortie (36) mène, dans la zone allant d'un point de bifurcation (34) vers le canal d'écoulement (28), jusqu'à son ouverture de sortie (40) associée et **en ce qu'**un dispositif de fermeture est présent pour ouvrir le canal de sortie (36) lorsque la distance minimale n'est pas atteinte et pour au moins le rétrécir dans le cas contraire.

9. Système de retenue des occupants d'un véhicule selon la revendication 8, **caractérisé en ce que** le dispositif d'obturation est couplé à la paroi extérieure de telle sorte qu'il rétrécit différemment le canal de sortie (36) en fonction de l'état de déploiement de la paroi extérieure.

10. Système de retenue des occupants d'un véhicule selon la revendication 9, **caractérisé en ce que** le dispositif d'obturation comporte un moyen de traction (50) qui s'étend depuis le canal de sortie (36) en direction de la paroi avant (14) et est fixé à la paroi extérieure de manière à être sollicité en traction lorsque le coussin gonflable (12) est complètement déployé et pour rétrécir le canal de sortie (36).

11. Système de retenue des occupants d'un véhicule selon la revendication 10, **caractérisé en ce que** le moyen de traction (50) peut rétrécir le canal de sortie (36) associé et, dans un état non complètement gonflé, libère le canal de sortie (36) et, dans un état complètement gonflé, le rétrécit.

12. Système de retenue des occupants d'un véhicule selon l'une des revendications précédentes, **caractérisé en ce que** deux canaux de sortie (36) partent du canal d'écoulement (28) et s'étendent jusqu'à des ouvertures de sortie latérales (40) espacées l'une de l'autre, notamment opposées, pour lequel en particulier les canaux de sortie (36) et le canal d'écoulement (28) forment ensemble une forme en T ou une forme de croix.

13. Système de retenue des occupants d'un véhicule selon l'une quelconque des revendications précédentes, **caractérisé en ce que** le canal d'écoulement (28) et le au moins un canal d'évacuation (36) ont chacun un contour tubulaire.

14. Système de retenue des occupants d'un véhicule selon l'une des revendications précédentes, **caractérisé en ce que** l'au moins une ouverture de sortie (40) se situe, par rapport à l'état complètement gonflé, dans le tiers par rapport à la distance entre la paroi arrière (16) et la paroi avant (14), qui est adjacent à la paroi arrière (16).

15. Système de retenue des occupants d'un véhicule selon l'une des revendications précédentes, **caractérisé en ce que**, par rapport à l'état complètement gonflé du coussin gonflable (12), le au moins un canal de sortie (36) s'étend en oblique latéralement depuis un point de dérivation (34) vers le canal d'écoulement (28) et en même temps en direction de la paroi arrière (16).
